(19) Europäisches Patentamt
European Patent Office
Office européen des brevets

(11) **EP 4 656 603 A1**

(12) **EUROPEAN PATENT APPLICATION**

(43) Date of publication:
**03.12.2025 Bulletin 2025/49**

(21) Application number: 24178298.6

(22) Date of filing: **27.05.2024**

(51) International Patent Classification (IPC):
*C03B 37/012* (2006.01)   *C03B 37/027* (2006.01)

(52) Cooperative Patent Classification (CPC):
**C03B 37/0122; C03B 37/01251;** C03B 37/02781;
C03B 2203/14; C03B 2203/16; C03B 2203/42

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **ASML Netherlands B.V.**
  **5500 AH Veldhoven (NL)**
• **Max-Planck-Gesellschaft zur Förderung der Wissenschaften e.V.**
  **80539 München (DE)**

(72) Inventors:
• **LAGLER, Josef**
  **5500 AH Veldhoven (NL)**
• **BERGLER, Michael, Sebastian**
  **80539 München (DE)**
• **FROSZ, Michael, Henoch**
  **80539 München (DE)**

(74) Representative: **ASML Netherlands B.V.**
**Corporate Intellectual Property**
**P.O. Box 324**
**5500 AH Veldhoven (NL)**

(54) **A METHOD OF MANUFACTURING A HOLLOW CORE CANE FOR USE IN MANUFACTURING A HOLLOW-CORE PHOTONIC CRYSTAL FIBER**

(57)    A method of manufacturing a hollow core cane, the method comprising: assembling a preform comprising a jacket 114 with a hollow inner structure 110, wherein a plurality of capillaries 105 are located within the hollow inner structure 110, the preform having a first end 104 and a second end; creating a tapered portion 116 of the preform at the first end 104; slicing the preform within the tapered portion to thereby create a sliced end 118 of the preform and expose cavities of the plurality of capillaries and the hollow inner structure 110; inserting a pressurization tube into one or more of the cavities at the sliced end 118 of the preform; sealing the least one pressurization tube 120 within the one or more cavities with a sealing agent; coupling the least one pressuriza- tion tube 120 to a pressure connector; and drawing a hollow core cane from the preform whilst providing pressure to the one or more cavities using the pressure connector.

Fig. 17

EP 4 656 603 A1

## Description

FIELD

The present invention relates to a method of manufacturing a hollow core cane for use in manufacturing a hollow-core photonic crystal fiber.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry tools for inspecting/measuring the exposed and/or etched product in process control. In each case, a radiation source is required. For various reasons, including measurement robustness and accuracy, broadband or white light radiation sources are increasingly used for such metrology applications. It would be desirable to improve on present devices for broadband radiation generation. Among other techniques for white light generation, photonic crystal fibers (PCFs) may be used to convert narrowband input radiation to broadband output radiation via one or more nonlinear optical processes. The output performance of a PCF based radiation source has a strong dependence on the quality and properties of the PCF which are predominantly determined by the fiber manufacturing process.

At present, PCFs are drawn in optical fiber drawing towers which draw a fiber in a continuous manner from a cane. In order to obtain the cane it is necessary to draw the cane from a preform. A preform comprises a jacket with a hollow inner structure, wherein a plurality of capillaries are located within the hollow inner structure.

One known method to prepare such a preform is the "stack-and-draw" procedure. The "stack-and-draw" procedure relies on the manual assembly of glass capillaries and rods (often referred to as supports) into an appropriate "preform stack" which is inserted into a glass tube called a jacket. The combination of the preform stack and the glass tube thereby forms the preform. Other methods exist to create the preform without the use of the rods/supports.

In a first drawing/scaling process (preform-to-cane drawing), the preform is scaled down following a predefined factor. Scaling is accomplished by inserting the preform at a constant speed, $v_{feed}$, into a tube furnace where the preform is heated until it is malleable. On the bottom side of the furnace, the preform is drawn at a constant speed, $v_{draw}$. The square root of the ratio between the draw speed and the feed speed (the former is always greater) is the scaling factor for the downscaling process: $$d_{out} = d_{in}\sqrt{v_{draw}/v_{feed}}$$. During the drawing/scaling process, the capillaries of the preform are fused to the jacket. The result is a scaled version of the preform, called a cane.

Starting with one of the canes, the final fiber is produced in a second drawing/scaling process. In the second drawing/scaling process, the fiber is drawn from an intermediate product called the fiber preform. This fiber preform consists of two parts: a fiber preform jacket, which is a thick-walled tube to increase the outer wall thickness of the final fiber product, and the cane (containing the desired internal structure of the HC-PCF).

In the second drawing/scaling step, the fiber preform is drawn into a fiber with the desired structural parameters, such as specific inner dimensions and the overall fiber outer diameter. The size and spacings of the inner structure can be controlled by adjusting process parameters such as furnace temperature, preform feed rate, drawing speed, and air-pressure applied within the structure of the cavities (e.g. of the capillaries and/or the hollow inner structure).

By selectively adjusting the pressure inside certain cavities in combination with appropriate drawing parameters, the dimensions of the final fiber product can be actively adjusted during the drawing process to ensure compliance with the specification.

SUMMARY

Unlike the fiber drawing process, the cane drawing process typically does not use active control of the pressure within individual cavities of the preform to counteract dimensional change during the drawing process. However, since the cavities at the top of the preform above the furnace are sealed and the cavities of the cane below the furnace are comparatively small, a self-pressurization effect is observed due to heating in the hot zone of the furnace. The self-pressurizing effect is normally used to keep the cavities of the inner structure from collapsing. On the one hand, the self-pressurization effect prevents the cavities from collapsing, but on the other hand, it is highly unstable. This instability occurs due to several reasons: the self-pressurization depends on the size and length of the cavities of the cane strand under the furnace and its ability to generate dynamic pressure. However, the cutting of reasonable lengths of cane (~1.1 meters) from the drawn cane strand results in varying lengths of the drawn cane strand (from the furnace hot zone to the end of the cut strand, -several meters) and therefore fluctuations in dynamic pressure. This in turn introduces variations in the dimensions of the inner cane structure.

A similar effect occurs at the beginning of the cane drawing process, where the internal structure is subjected to strong fluctuations until a stable dynamic pressure condition is reached within the cavities of the cane structure. Since the strand length is constantly changing, the pressure inside the cavities (especially inside thin-walled capillaries) can periodically fluctuate from a negative pressure regime to a strong positive pressure regime. This results in completely collapsed or over-expanded cavities inside the inner cane structure. The inventors have observed that a significant portion of the starting material of the preform is lost before a stable dynamic pressure condition and thus stable dimensions of the inner structure are achieved. Due to the decreasing length of the cavities above the furnace at the end of the cane drawing, the volume inside the cavities decreases. This results in a decreasing self-pressurizing effect toward the end of the drawing, leading to a collapse of the cavities of the cane structure.

In case the preform is not self-pressurized, or even if it is bypassed (open to the surrounding atmosphere), variations in the internal structure of the cane may also occur due to surface tension during the heating and cooling process. The thinner the inner cane structure, the more the structure is affected. The surface tension can to some degree be controlled by drawing at high tensions due to a lower furnace temperature. However, this is only possible for small diameter preforms which are less affected by a temperature gradient from the outside compared to the inside of the preform. For thicker preforms, which need sufficient heating to reach malleability, a strong temperature gradient from the outside compared to the inside is generated. Based on the temperature gradient, a tension gradient is present which affects the structure closer to the outside in a different way than the structure which is further inside.

According to an aspect of the present invention, there is provided a method of manufacturing a hollow core cane for use in manufacturing a hollow-core photonic crystal fiber, the method comprising: assembling a preform comprising a jacket with a hollow inner structure, wherein a plurality of capillaries are located within the hollow inner structure, the preform having a first end and a second end; creating a tapered portion of the preform at the first end; slicing the preform within the tapered portion to thereby create a sliced end of the preform and expose cavities of the plurality of capillaries and the hollow inner structure; inserting a pressurization tube into one or more of the cavities at the sliced end of the preform; sealing the least one pressurization tube within the one or more cavities with a sealing agent; coupling the least one pressurization tube to a pressure connector; and drawing a hollow core cane from the preform whilst providing pressure to the one or more cavities using the pressure connector.

The ability to actively control the pressure within the cavities of the plurality of capillaries and/or the hollow inner structure has several advantages similar to the fiber drawing process. Applying a constant pressure to the inner structure from the beginning of the drawing process completely eliminates any variation in the dimensions of the inner structure due to pressure fluctuations. A collapsing or over-expanding effect is effectively prevented by rapidly stabilizing a dynamic pressure condition within the cavities of the plurality of capillaries and/or the hollow inner structure. As a result, a loss of starting material of the preform due to unstable pressure conditions is reduced significantly.

In addition, active pressure control allows the dimensions of the internal structure of the preform (e.g. the plurality of capillaries and/or the hollow inner structure) to be precisely adjusted during the cane drawing process. This eliminates the small variations inherent in a pure scaling process, and the resulting cane can be precisely tailored to a given specification. This effectively increases the yield of canes within specification per cane drawing process. Combined with the reduction in starting material loss, the overall yield per cane drawing can be significantly increased (e.g. by up to 50 %).

During the drawing of the hollow core cane from the preform, heat is applied to the preform. For example, the preform may be fed downward into a furnace. During the drawing of the hollow core cane from the preform, heat is effectively guided upwards towards the sliced end. The tapered portion advantageously reduces heat at the sliced end of the preform due to the reduced cross-sectional area. This advantageously avoids damage to the pressurization tube(s) and to the sealing agent.

The method may comprise inserting a pressurization tube into the cavity of one or more of the plurality of capillaries. This allows the pressure within these capillaries to be controlled by the pressure connector during the drawing and thereby the dimensions of these capillaries can be controlled.

The method may comprise inserting a pressurization tube into the cavity of the hollow inner structure. This allows the pressure within the hollow inner structure to be controlled by the pressure connector during the drawing and thereby the dimensions of the hollow inner structure can be controlled.

Assembling the preform may comprise roughening an outer surface of the jacket over a portion of the jacket. The roughened portion of the jacket acts to dissipate heat during the drawing process before it reaches the pressure connector. This advantageously avoids damage to the pressurization tube(s) and to the sealing agent.

The roughening of the outer surface of the jacket may comprise directing a fluid towards the portion of the jacket, the fluid comprising abrasive particles.

The abrasive particles may comprise one or more of: aluminum oxide, silica, glass beads and steel grit.

The portion of the jacket may be located closer to the first end of the preform than to the second end of the preform. The portion of the jacket may be located closer to the first end of the preform than to a center of the axial length of the preform. The roughened portion of the jacket is unusable to produce a cane (when it enters a furnace, the roughened portion disturbs the intended homogeneous conditions and creates a non-ideal surface in the cane when it is drawn). Locating the roughened portion in these particular ways advantageously increases the yield of canes within specification per cane drawing process.

The portion of the jacket may be separated from the first end of the preform by a further portion of the outer surface of the jacket. The roughening may not be performed on the further portion of the jacket. The roughened portion is a damaged surface and thus is typically more brittle and thus fragile. By coupling the pressure connector to a smooth portion of the preform, this reduces the risk of any breakages of the preform when the preform is coupled to the pressure connector.

Assembling the preform may comprise inserting at least one stabilizing structure into the preform at one or both of the first end and second end such that the at least one stabilizing structure is located in between the plurality of capillaries. The at least one stabilizing capillary act as an anchor point for one or more of the plurality of capillaries during drawing. In particular, one or more of the plurality of capillaries fuse to the additional anchor points, distributing the surface tension that occurs during heating of the preform, thereby preventing the collapse of the capillaries.

The inserting may comprise inserting a pressurization tube such that the pressurization tube extends into a respective cavity by at least 1 cm, optionally by at least 2 cm, further optionally by at least 3 cm, further optionally by at least 4 cm, and further optionally by at least 5 cm. By inserting a pressurization tube far enough into a respective cavity, this advantageously avoids the pressurization tube being sealed by the sealing agent.

The inserting may comprise inserting a pressurization tube such that a length of the pressurization tube extends from the sliced end external to the preform.

The method may further comprise directing a gas towards the sliced end during the drawing. This advantageously provides cooling at the sliced end of the preform due to the reduced cross-sectional area, thereby avoiding heat damage to the pressurization tube(s) and to the sealing agent.

The sealing agent may be an ultraviolet-curing adhesive and said sealing comprises depositing the sealing agent at the sliced end and directing ultraviolet radiation towards the sealing agent.

The method may further comprise controlling the pressure provided to the one or more cavities during the drawing.

The hollow inner structure of the preform may have a polygonal cross-section.

The hollow inner structure of the preform may have a hexagonal cross-section.

A wall thickness of one or more of the plurality of capillaries may be at least 100 $\mu$m. The capillaries having this wall thickness are advantageously able to withstand the surface tensions that occur during heating and are therefore less likely to deform.

According to another aspect of the present invention there is provided a preform for manufacturing a hollow core cane, the preform comprising: a jacket with a hollow inner structure, wherein a plurality of capillaries are located within the hollow inner structure, the preform having a first tapered end and a second end; and one or more pressurization tubes for coupling to a pressure connector, the one or more pressurization tubes extending into one or more cavities of the preform and sealed with a sealing agent at the first tapered end.

## BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;

- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device;
- Figure 5 depicts a schematic overview of a level sensor apparatus which may comprise a radiation source;
- Figure 6 depicts a schematic overview of an alignment sensor apparatus which may comprise a radiation source;
- Figure 7 is a schematic cross sectional view of a hollow core optical fiber that may form part of a radiation source in a transverse plane (i.e. perpendicular to an axis of the optical fiber);
- Figure 8 depicts a schematic representation of a radiation source for providing broadband output radiation;
- Figures 9(a) and 9(b) schematically depict the transverse cross-sections of examples of hollow core photonic crystal fiber (HC-PCF) designs for supercontinuum generation;
- Figure 10a illustrates collapsed capillaries of a hollow core cane due to a negative pressure condition;
- Figure 10b illustrates over-expanded capillaries of a hollow core cane due to a positive pressure condition;
- Figure 10c illustrates capillaries of a hollow core cane resulting from a stable dynamic pressure condition;
- Figure 10d illustrates collapsed capillaries of a hollow core cane due to reducing stable dynamic pressure conditions towards the end of the hollow core cane drawing process.
- Figure 11 is a flow diagram of a method of manufacturing a hollow core cane;
- Figure 12 illustrates a preform used to manufacture a hollow core cane;
- Figure 13a illustrates a cross-section of the preform;
- Figure 13b illustrates a cross-section of the preform into which stabilizing structures have been inserted;
- Figure 14 illustrates a roughened portion of a jacket of the preform;
- Figure 15 illustrates a step of creating a tapered portion of the preform at a first end of the preform;
- Figure 16 illustrates a step of slicing the preform within the tapered portion;
- Figure 17 illustrates a step of inserting a pressurization tube into one or more cavities at the sliced end of the preform;
- Figure 18 illustrates a cross-section of the preform illustrating the locations at which a pressurization tube may be inserted; and
- Figure 19 illustrates the drawing of a hollow core cane from the preform.

## DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

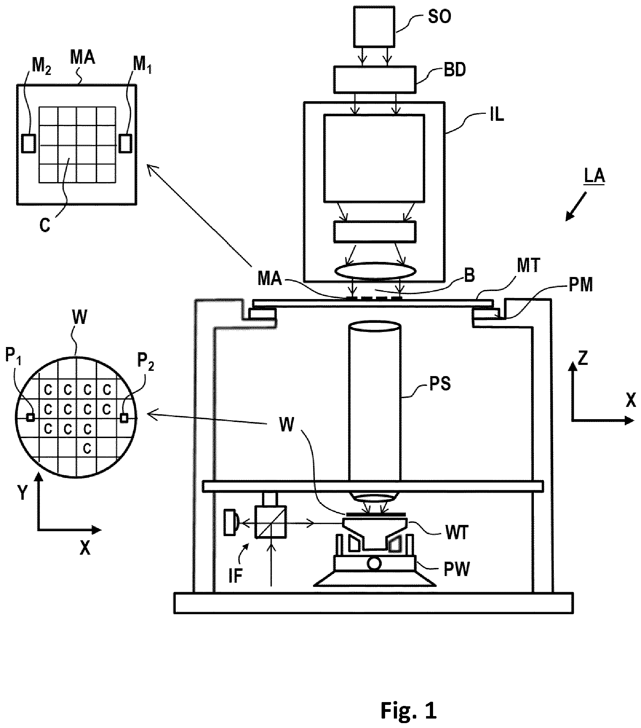

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

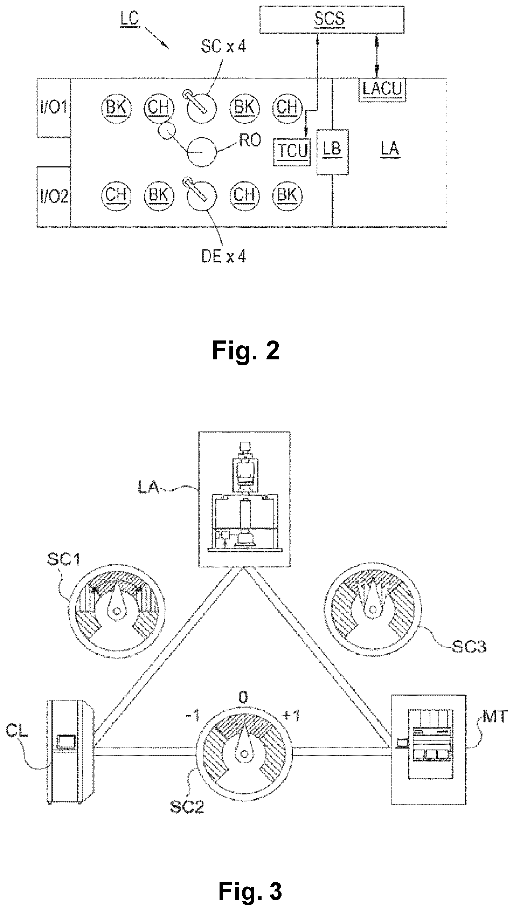

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

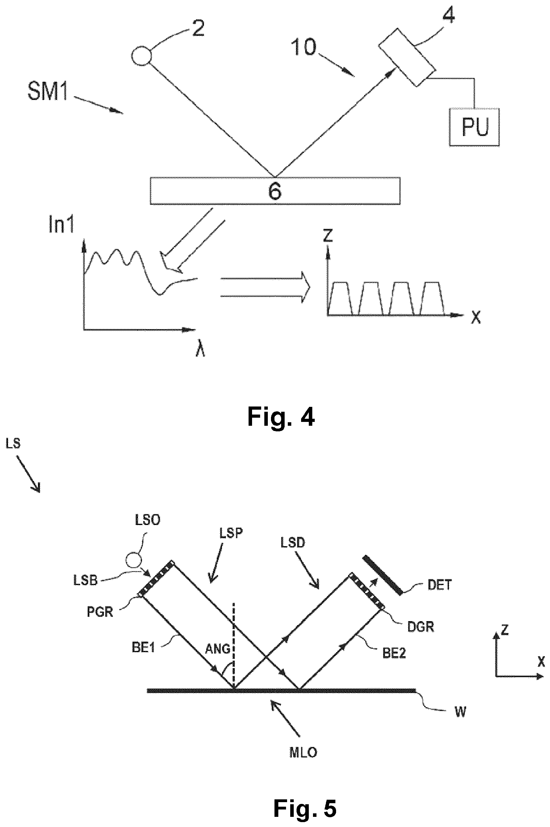

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

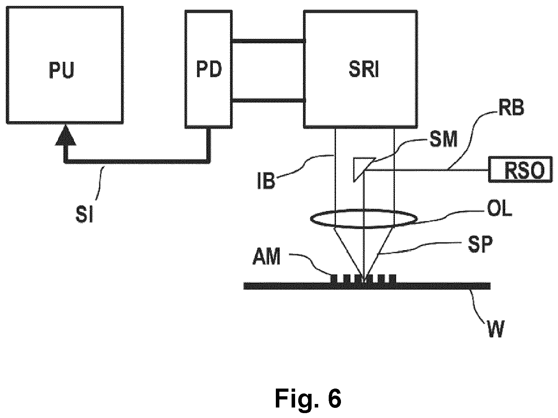

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid materials.

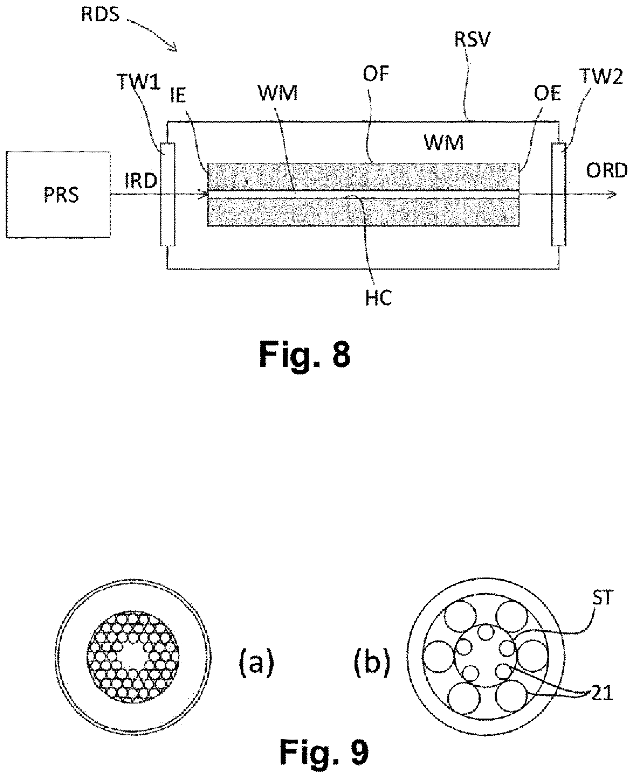

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 9(a) shows a Kagome fiber, comprising a Kagome lattice structure.

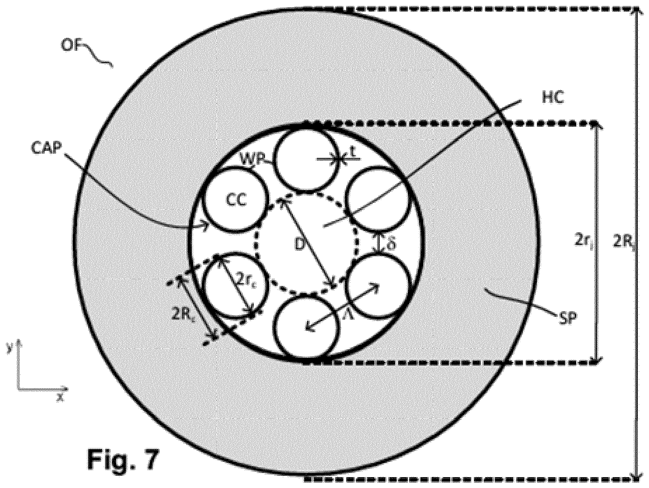

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 centimeter (cm) and 10 meter (m), for example, the optical fiber OF may have a length between 10 cm and 100 cm.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements or capillaries CAP for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter D of the hollow core HC (which may be defined as the smallest dimension between opposed capillaries, indicated by arrow d) may be between 10 and 1000 $\mu m$. The diameter D of the hollow core HC may affect the mode field diameter, impact loss, dispersion, modal plurality, and non-linearity properties of the hollow core HC optical fiber OF.

The other dimensions shown are the pitch of neighboring capillaries A, the gap between neighboring capillaries $\delta$, inner capillary radius $r_c$, outer capillary radius $R_c$, capillary wall thickness $t = R_c - r_c$, radius of the hollow region $r_j$ and radius of the fiber $R_j$.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 9(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 9(b) shows a modified embodiment of the above discussed HC-PCFs with a single ring of tubular capillaries. In the example of Figure 9(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 7 and Figures 9 (a) and (b) may have a circular cross-sectional shape. Other shapes are also possible for the tubular capillaries, like elliptical or polygonal cross-sections. Additionally, the solid material of the tubular capillaries of the examples of Figure 7 and Figures 9 (a) and (b) may comprise plastic material, like PMA, glass, like silica, or soft glass.

Figure 8 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 7) with a hollow core HC; and a working medium WM (for example a gas) disposed within the hollow core HC. Although in Figure 8 the radiation source RDS comprises the optical fiber OF shown in Figure 7, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the radiation source RDS.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 8 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 $\mu$m. The input radiation IRD may for example comprise electromagnetic radiation with a wavelength of 1.03 $\mu$m. The repetition rate of the pulsed radiation IRD may be of an order of magnitude of 1 kHz to 100 MHz. The pulse energies may have an order of magnitude of 0.1 $\mu$J to 100 $\mu$J, for example 1 - 10 $\mu$J. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

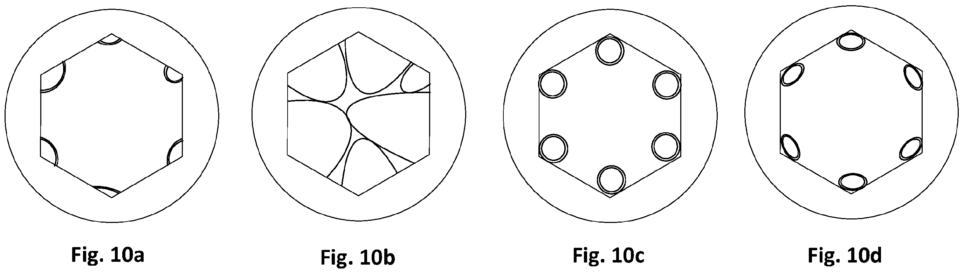

Referring back to the process of drawing a hollow core cane from a preform, as noted above, the internal structure is subjected to strong fluctuations until a stable dynamic pressure condition is reached within the cavities of the cane structure. Figures 10a - d illustrate the different states of the inner cane structure during the cane drawing process. Figure 10a illustrates collapsed capillaries of a hollow core cane due to a negative pressure condition inside the cavities of the cane structure. Figure 10b illustrates over-expanded capillaries of a hollow core cane due to strong positive pressure condition inside the cavities. Up to 33% of the starting material can be lost before a stable dynamic pressure condition and thus stable dimensions of the inner structure are achieved. Figures 10c illustrates stable dynamic pressure conditions inside the cavities. Figure 10d illustrates reducing stable dynamic pressure conditions inside the cavities towards the end of the hollow core cane drawing process.

Embodiments of the present invention are directed to a method of manufacturing a hollow core cane which prevents the collapsing and over-expanding of capillaries of the hollow core cane during manufacture.

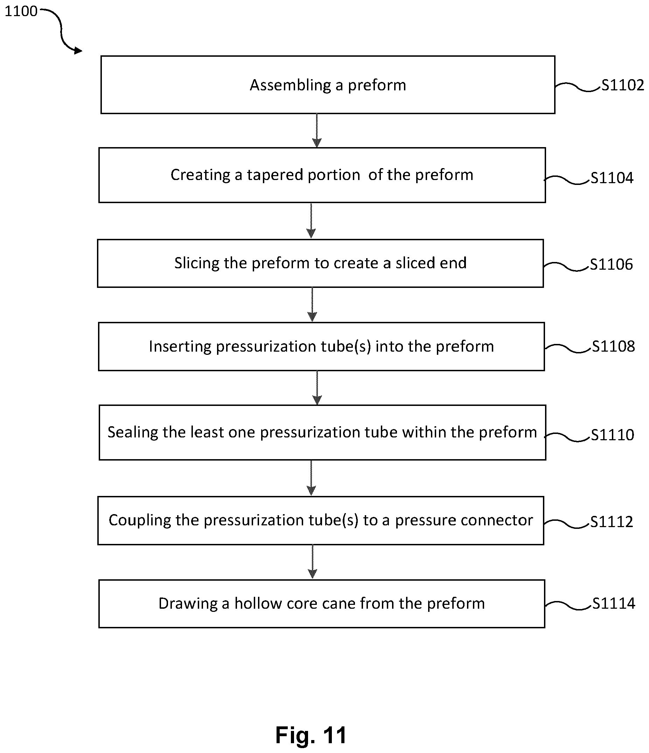

Figure 11 is a flow diagram of a method 1100 of manufacturing a hollow core cane according to concepts disclosed herein.

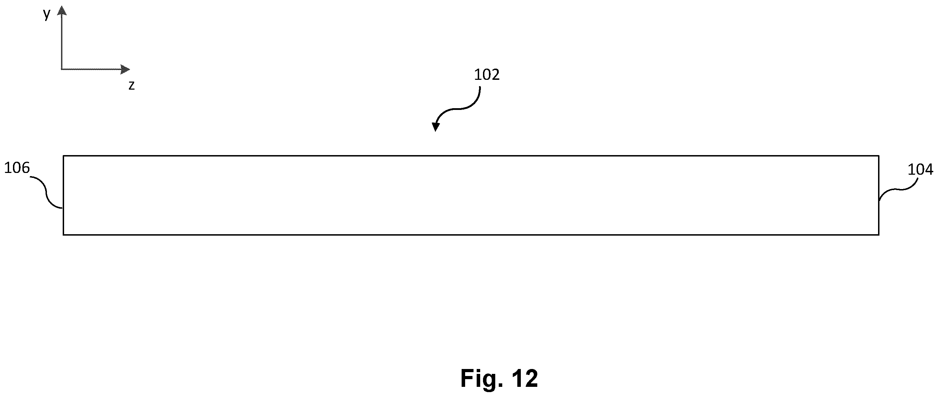

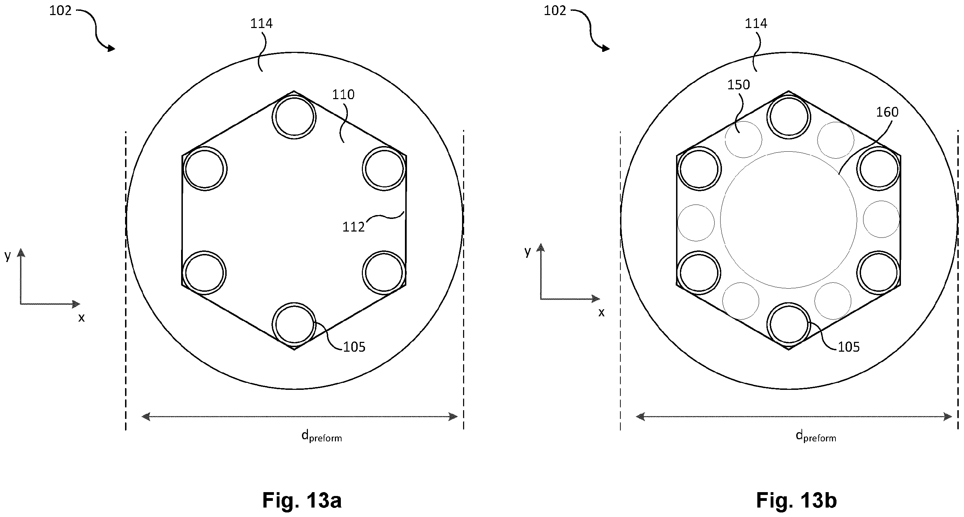

At step S1102, a preform 102 is assembled. As shown in Figure 12, the preform 102 has a first end 104 and a second end 106. As shown in Figure 13a, the preform 102 comprises a jacket 114 with a hollow inner structure 110, wherein a plurality of capillaries 105 are located within the hollow inner structure 110.

The jacket 114 comprises an elongate body, which is longer in one dimension compared to the other two dimensions of the preform jacket. This longer dimension (shown in the z-axis) may be referred to as an axial direction and may define an axis of the jacket 114. The two other dimensions define a plane which may be referred to as a transverse plane. Figure 13a shows a cross-section of the jacket in this transverse plane (i.e. perpendicular to the axis), which is labelled as the x-y plane. The jacket 114 may comprise glass (like silica), or soft glass. The jacket 114 may comprise fused silica.

The plurality of capillaries 105 may have a circular cross-sectional shape. Other shapes are also possible for the tubular capillaries 105, like elliptical or polygonal cross-sections. The thickness of the walls of one or more of the plurality of capillaries 105 may be in a range of 50 $\mu$m to 150 $\mu$m, optionally in a range of 75 $\mu$m to 125 $\mu$m The thickness of the walls of one or more of the plurality of capillaries 105 may be at least 100 $\mu$m.

As shown in Figure 13a, one or more walls 112 define the hollow inner structure 110 of the jacket 114. Figure 13a shows the hollow inner structure 110 having a hexagonal cross-section, however it will be appreciated that this is merely an example. In some embodiments, the hollow inner structure 110 has a cylindrical cross-section. In other embodiments, the hollow inner structure 110 has a non-cylindrical cross-section. For example, the hollow inner structure may have a polygonal cross-section (e.g., a pentagonal, hexagonal, heptagonal etc. cross-section). In embodiments whereby the hollow inner structure 110 has a non-cylindrical cross-section, a corner of the hollow inner structure 110 is defined where two walls 112 meet.

The diameter of the jacket 114 ($d_{preform}$) may be between 10 mm - 50 mm. The jacket 114 may have a length of between 0.3 m and 2 m. The jacket 114 may have a length of between 0.3 m and 1.4 m, e.g., about 1 m.

At step S1102, the preform 102 may be assembled according to the "stack-and-draw" procedure. In this implementation, at least one stabilizing structure is inserted into the hollow inner structure 110 of the preform 102 at both the first end 104 and the second end 106. The at least one stabilizing structure extend into the preform 102 but do not extend along the entire length of the preform 102. While the capillaries 105 run the entire length of the jacket 114 as part of the desired cane structure, the stabilizing structures at both ends of the jacket may protrude only ~15 cm into the jacket to ensure adequate stabilization of the capillaries along the entire length. At each end of the preform 102, a stabilizing structure 150 (shown in Figure 13b) may be placed between adjacent capillaries. At each end of the preform 102, a stabilizing structure 160 (shown in Figure 13b) may be inserted centrally into the hollow inner structure 110 in between the capillaries 105. The at least one stabilizing structure may comprise solid rods and/or tubes.

Alternatively, at step S1102 the preform 102 may be assembled according to the procedure described in European patent application No. EP23188363.8, filed 28 July 2023, the contents of which are incorporated herein by reference. This procedure comprises: (i) inserting a capillary 105 into the hollow inner structure 110 such that the capillary 105 is in contact with the hollow inner structure 110 at a contact position and protrudes out of the hollow inner structure at the first end 104 and at the second end 106; (ii) at the first end, locally heating a protruding portion of the capillary 105; (iii) bending the protruding portion around the first end of the jacket; and (iv) applying additional heat to a portion of the capillary 105 that is bent around the jacket to fuse it to an outer surface of the jacket. Steps (ii) to (iv) may be repeated at the second end. Furthermore, this procedure may be repeated at each of one or more further contact positions on the hollow inner structure for one or more further capillaries. In this implementation, a stabilizing structure may not be necessary. However, a stabilization structure 160 (which may be a solid rod or tube) may be inserted into the hollow inner structure 110 at the first end 104 in between the capillaries 105. This single stabilization structure 160 is inserted centrally and provides anchor points for a subsequent "drop-off" procedure in which a tapered portion of the preform is created at the first end 104, described further below. During drop-off the capillaries 105 fuse to the additional anchor points, distributing the surface tension, which has been shown to prevent the collapse of the capillaries 105. In this implementation, no stabilizing structures 150 are placed between adjacent capillaries.

Whilst the examples of Figures 13a and 13b show the preform 102 comprising six capillaries, it will be appreciated that embodiments of the present disclosure are not limited to this and the preform 102 may comprise a number of capillaries different to six.

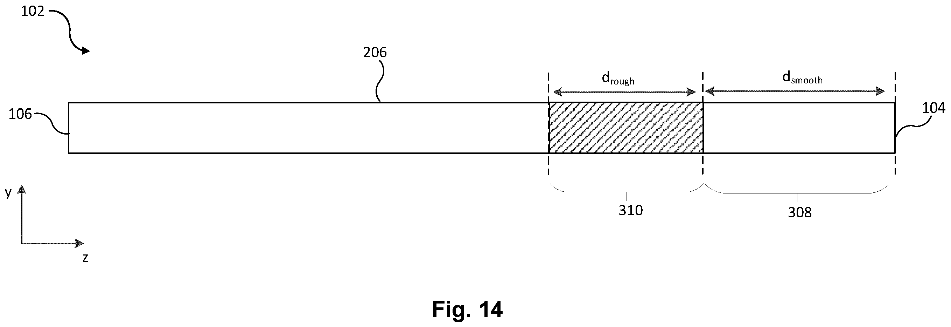

Irrespective of the technique used to position the plurality of capillaries 105 within the hollow inner structure 110, step S1 102 may optionally comprise roughening an outer surface 206 of the jacket 114 over a portion of the jacket, this is illustrated in Figure 14.

At step S1102, the outer surface 206 of the jacket 114 is roughened over a portion 310 of the jacket 114 of the preform 102. In the example method, the preform 102 is held horizontally whilst the roughening is performed. However, this is merely an example. The roughened portion may extend partially or fully around the circumference of the jacket 114.

The portion of 310 of the jacket 114 may be roughened using one or more different techniques.

In one implementation, roughening of the outer surface 206 of the jacket 114 comprises directing a fluid towards the portion 310 of the cane jacket 114, the fluid comprising abrasive particles. In some examples, the fluid comprises a gas. For example, compressed air may be used to propel the abrasive particles towards the outer surface 206 of the jacket 114 to create the roughened portion 310. In these examples, the abrasive particles may comprise one or more of: aluminum oxide, silica, glass beads and steel grit. It will be appreciated that additional and/or alternative types of abrasive particles other than those described herein may be propelled by the fluid. In other examples, the fluid comprises a liquid. For example, water (or any other liquid) may be used to propel the abrasive particles towards the outer surface 206 of the jacket 114 to create the roughened portion 310.

Alternatively, or additionally, the roughening of the outer surface 206 of the jacket 114 comprises chemically etching the portion 310 of the jacket 114. In particular, a chemical etchant is directed towards, and incident on, the portion 310 of the jacket 114 to roughen the outer surface 206.

Alternatively, or additionally, the roughening of the outer surface 206 of the jacket 114 comprises plasma etching the portion 310 of the jacket 114. In particular, the portion 310 of the jacket 114 is exposed to one or more reactive gases which is then ionized, turning it into plasma.

Alternatively, or additionally, the roughening of the outer surface 206 of the jacket 114 comprises directing radiation emitted from a radiation source to be incident on the portion 310 of the jacket 114 to roughen the outer surface 206. The radiation source may be a laser. The radiation source may be a continuous wave source or a pulsed wave source (e.g. a pulsed laser source). For a continuous wave source the radiation emitted from the radiation source may have a wavelength in the lower UV range (e.g. in a range of 10-200nm) and wavelengths above the infrared range (e.g. greater than 1mm) in order for the radiation to couple into the jacket 114 and be absorbed. For a pulsed wave source the entire spectrum is usable from UV (e.g. approximately 355nm) to infrared in order for the radiation to couple into the cane jacket 114 and be absorbed. For example an infrared $CO_2$ far-infrared laser (with a wavelength of approximately 10600nm) may be used.

Alternatively, or additionally, the roughening of the outer surface 206 of the jacket 114 comprises applying an abrading material to the portion 310 of the jacket 114. That is, the abrading material (e.g. grinding paper) is physically brought into contact with the portion 310 and moved across the outer surface 206 of the portion 310 one or more times to roughen it.

At step S1102, the outer surface 206 of the jacket 114 may be roughened over the portion 310 of the jacket 114 such that the portion 310 has a Root Mean Square (RMS) height (Sq), as defined by the ISO 25178 standard, in a range between 40-120nm, optionally in a range between 60-100nm.

At step S1102, the outer surface 206 of the jacket 114 may be roughened over the portion 310 of the jacket 114 such that the portion 310 has an arithmetic mean height (Sa) as defined by the ISO 25178 standard in a range between 25-105nm, optionally in a range between 45-85nm.

At step S1102, the outer surface 206 of the jacket 114 may be roughened over the portion 310 of the jacket 114 such that the portion 310 has a maximum height (Sz) as defined by the ISO 25178 standard in a range between 285-365nm, optionally in a range between 305-345nm. The maximum height (Sz) being the sum of the largest peak height value and the largest pit depth value within the area of the portion 310.

In some embodiments, the roughened portion 310 of the jacket 114 is located closer to the first end 104 of the preform 102 than to the opposing second end 106.

In some embodiments, the roughened portion 310 of the jacket 114 is located closer to the first end 104 of the preform 102 than to a center of the axial length (length in the axial direction) of the preform 102.

The axial length ($d_{rough}$) of the roughened portion 310 of the jacket 114 may be less than 10cm. The axial length ($d_{rough}$) of the roughened portion 310 of the jacket 114 may for example be in a range between 1-5cm, optionally in a range between 2-4cm. The axial length ($d_{rough}$) of the roughened portion 310 of the jacket 114 may be at least 3cm.

The roughened portion 310 is unusable to produce a hollow core cane from i t. When the roughened portion 310 enters a furnace during drawing, it disturbs the intended homogeneous conditions and creates a non-ideal surface in the hollow core cane when it is drawn. Therefore, it is preferable for the roughened portion 310 to be located in close proximity to the first end 104 where the preform 102 is held during the cane drawing.

In some embodiments, the roughened portion 310 extends from the first end 104 of the preform 102 along the axial length of the preform 102.

In other embodiments, the roughened portion 310 is separated from the first end 104 of the preform 102 by a further portion 308 of the jacket 114. This is illustrated in Figure 14. The roughening performed is not applied to the further portion 308 (otherwise referred to herein as a "smooth" portion because the roughening is not applied to this portion) or the remaining portions of the preform 102. That is, the roughening is only applied to the portion 310 of the preform 102. Thus, once the roughening has been performed the portion 310 has a rougher surface than all of the remaining portions of the outer surface 206 of the jacket 114. By roughening the portion 310 which is separated from the first end 104 of the preform 102 by a further portion 308 of the jacket 114, this reduces the risk of damaging the preform 102.

The axial length ($d_{smooth}$) of the smooth portion 308 of the jacket 114 may for example be in a range between 5-15cm, optionally between 7-14cm. It is advantageous to reduce the axial length ($d_{smooth}$) of the smooth portion 308 to reduce the amount of the perform 102 that is "lost" when drawing a hollow core cane from the preform 102.

Referring back to the method 1100 of Figure 11, once the preform 102 has been assembled, the process proceeds to step S1104.

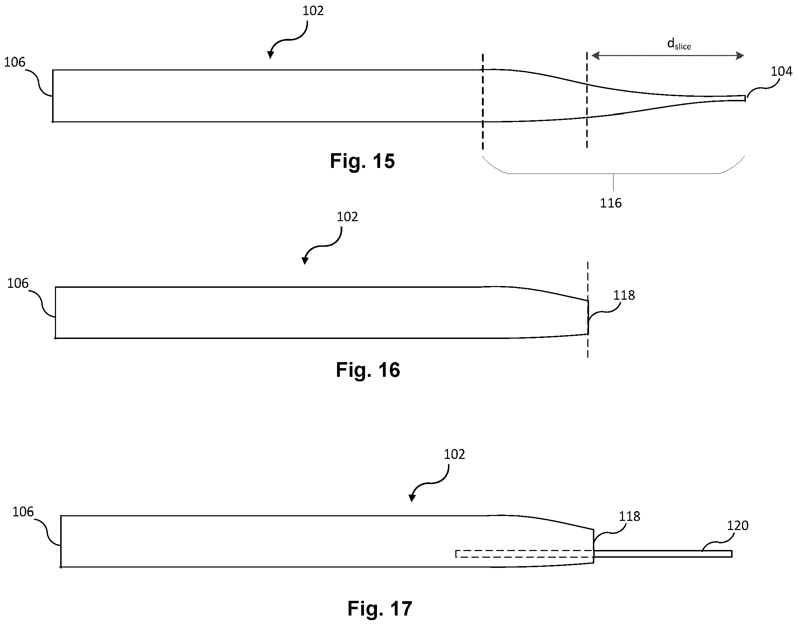

At step S1104 a tapered portion 116 of the preform is created at the first end 104. This tapered portion 116 is illustrated in Figure 15.

The tapered portion may be accomplished by performing a "drop-off" procedure. During this process, the preform 102 is held vertically by a connector at the second end 106 and the first end 104 is heated in a drawing furnace. By applying heat of up to for example 2100°C, the viscosity of the preform decreases in the heated area. Since a small portion of the preform 102 is below the hot zone of the furnace, this portion acts as a weight that initiates a tapering effect that occurs in the hot zone. During the drop-off procedure, the capillaries 105 at the first end 104 fuse to the inner walls of the hollow inner structure 110. If at least one stabilizing structure is inserted, one or more of the capillaries 105 may fuse to each stabilizing structure. In the tapered portion 116 the diameter of the hollow inner structure 110 and the capillaries is reduced compared to the remaining (untampered portion) of the preform 102.

Further illustrated in Figure 15 is a distance $d_{slice}$ from the first end at which the preform 102 is to be cut-open to provide access to the capillaries 105 within the preform 102. It will be appreciated that the distance $d_{slice}$ is to be of a sufficient length such that, when the preform 102 is sliced, the exposed capillaries 105 are hollow (i.e. they are not sealed as a consequence of the drop-off procedure). The distance $d_{slice}$ may be at least 4cm, optionally at least 5cm, optionally at least 6cm.

At step S 1106, the preform 102 is sliced within the tapered portion (at distance $d_{slice}$) to thereby create a sliced end 118 of the preform and expose cavities of the plurality of capillaries 105 and the hollow inner structure 110, this is illustrated in Figure 15. The removed section of the tapered portion can be discarded.

At step S1108, a pressurization tube 120 is inserted into one or more of the cavities at the sliced end 118 of the preform 102. For simplicity, Figure 17 illustrates a single pressurization tube inserted into a cavity at the sliced end 118, but it will be appreciated that multiple pressurization tubes 120 may be inserted into cavities at the sliced end 118.

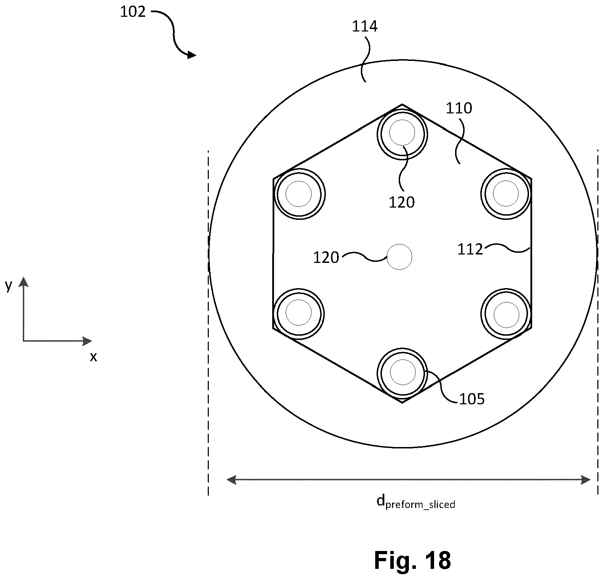

Figure 18 illustrated a schematic cross sectional view of the sliced end 118 of the preform 102 in a transverse plane. As shown in Figure 18, a pressurization tube 120 may be inserted into one or more of the capillaries 105 and/or the hollow inner structure 110. In one example, a pressurization tube 120 is inserted into each of the capillaries 105.

At step S1108, the pressurization tube(s) are inserted into the cavities of the capillaries 105 and/or the hollow inner structure 110 by a sufficient distance such that an inserted end of the pressurization tube does not become sealed when a sealing agent is applied. Each pressurization tube may extend into a respective cavity by at least 1cm, optionally by at least 2 cm, further optionally by at least 3 cm, further optionally by at least 4 cm, and further optionally by at least 5 cm.

At step S1108, the pressurization tube(s) are inserted such that a length of each pressurization tube extends from the sliced end 118 external to the preform 102. This enables each pressurization tube to extend into a pressure chamber of a pressure connector when the preform 102 is coupled to the pressure connector at the sliced end.

As shown in Figure 18, the sliced end 118 of the preform 102 has a diameter $d_{sliced}$ which is less than the diameter $d_{preform}$ of the preform 102 in the untapered portion of the preform 102. It will be appreciated that the diameter of the capillaries 105 at the sliced end 118 is also less than the diameter of the capillaries 105 in the untapered portion of the preform 102.

At step S1110, the pressurization tube(s) are sealed to the preform 102 using a sealing agent. That is, the sealing agent is deposited at the sliced end 118 such that each pressurization tube is sealed within the cavity to which it is inserted. The sealing agent may be an adhesive. For example, the sealing agent may be an ultraviolet-curing adhesive. In this example, ultraviolet radiation is directed towards the sealing agent to cure the sealing agent.

At step S1112, the pressurization tube(s) are coupled to a pressure connector 402. In particular, the preform 102 is coupled to the pressure connector at the sliced end 118.

In embodiments in which a pressurization tube is inserted into the hollow inner structure 110, the pressurization tube may extend into an internal core pressure chamber of the pressure connector 402 which is in fluidic communication with a first pressure connection 404 which allows pressure to be applied to the hollow inner structure 110 and selectively controlled.

In embodiments in which a pressurization tube is inserted into one or more of the capillaries 105, these pressurization tube(s) may extend into an internal core pressure chamber of the pressure connector 402 which is in fluidic communication with a second pressure connection 406 which allows pressure to be applied to the one or more capillaries 105 and selectively controlled.

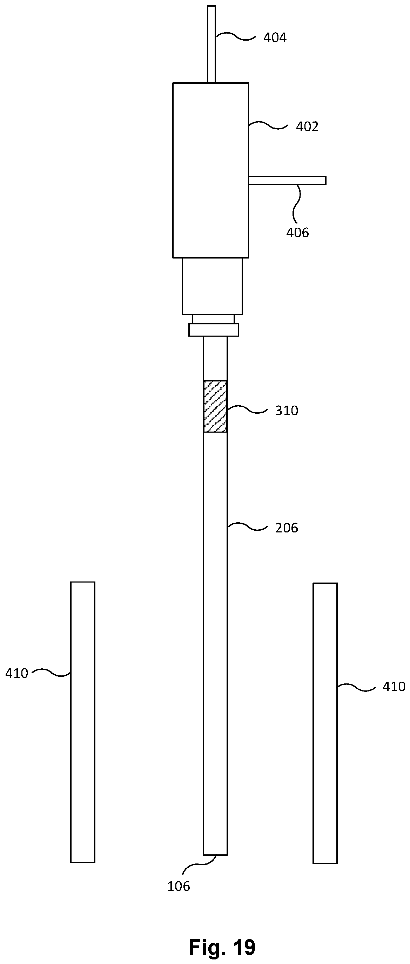

At step S1114, a hollow core cane is drawn from the preform 102. The preform 102 may be held at the top of a drawing tower where the preform is fed downward into a furnace 410 so as to heat a lower section of the preform, this is illustrated in Figure 19. The heated region of the preform softens and elongates with a teardrop-shaped drip which pulls the cane downward (also known as drop-off). Additional pulling and tension control is used to ensure the preform 102 is drawn to a hollow core cane. Typically, a one-meter long preform can be drawn to a 10 m - 1000 m long cane. Such a long cane is then cut into shorter pieces each with a length of e.g., between 0.5 m and 2 m, e.g., about 1 m.

The pressure inside the cavities is actively controlled through the inserted capillaries, during the cane drawing process. That is, at step S1114, during the drawing of the hollow core cane from the preform 102, pressure is applied to the cavities of hollow inner structure 110 and/or one or more capillaries 105.

The first pressure connection 404 and the second pressure connection 406 of the pressure connector 402 enable the ability to actively control the pressure within the cavities of the inner structure of the preform during the drawing process. In particular, during the drawing process a constant pressure may be applied to the cavities of hollow inner structure 110 and/or one or more capillaries 105.

During the drawing of the hollow core cane from the preform 102, additional cooling of the sliced end 118 may be provided. This advantageously prevents damage to the sealing agent (e.g. UV-curing adhesive) and heat sensitive parts (inserted pressurization tube(s)). The additional cooling may be implemented by directing a gas (e.g. pressured gas) towards the sliced end 118 during the drawing process.

Other additional or alternative cooling methods that may be implemented in the additional cooling step include the use of a water-cooled pressure connector 402, or the use of heat pipes in direct contact with the sealing agent.

The reduction in heat provided by the reduced cross-sectional area at the sliced end (and optionally the roughened portion of the outer surface 206 of the jacket 114 and/or the additional cooling) enables the use of the pressure connector 402 (due to the reduction in temperature) to actively control the pressure in the cavities of hollow inner structure 110 and/or one or more capillaries 105.

An example cane may comprise a plurality of capillaries which surround a hollow core and that are supported by a support portion. Whilst the hollow core cane looks more like a final HC-PCF (or a target HC-PCF), it is rigid and its physical dimensions (e.g., capillary dimensions) are all larger than those of the final HC-PCF. The hollow core cane may have an outer diameter of e.g., between 0.5 mm - 10 mm, and the cane capillaries that surround the hollow core HC of the cane may each have an outer diameter of e.g., between 100 $\mu$m and 1500 $\mu$m or between 100 $\mu$m - 1000 $\mu$m and a wall portion thickness of e.g., between 1.5 $\mu$m - 100 $\mu$m.

Once the hollow core cane has been manufactured it can then be used to manufacture a HC-PCF. Whilst these subsequent manufacturing steps are outside the scope of the present invention they are included herein for context.

The hollow core cane may be prepared for a fiber drawing step. The cane preparation step may comprise connecting pressure tubes to the cane capillaries. In this manner, the hollow core cane may be connected to a pressure supply which is used to pressurize the internal structures of the cane during the fiber drawing step so as to cause each of the capillaries to inflate in a desired and controlled manner.

The hollow core cane may then be installed in another drawing tower (e.g., suitably-equipped to draw HC-PCF) and heated within a furnace. The cane is drawn to the final HC-PCF, such that the HC-PCF comprises target dimensions. Typically, a one-meter long cane can be drawn to 100s of meters of fibers in a continuous manner. In its final form, the outer diameter of the HC-PCF may be reduced to e.g., between 100 $\mu$m - 300 $\mu$m. By carefully tuning the relative pressure between different parts (e.g., the capillary cavities and hollow core) of the internal structures of the cane, the cane capillaries are inflated and as such their outer diameter is increased with respect to the inner diameter of the support portion. At the end of fiber drawing, the outer diameter of the capillaries may be increased to e.g., between 10 $\mu$m - 50 $\mu$m and correspondingly the thickness of the capillary wall portions may be reduced to e.g., 0.05$\mu$m - 0.2$\mu$m. The positive pressure difference between each capillary cavity and the hollow core may range between 1 millibar (mbar) and 1000 mbar.

Finally, an optional respooling step may be performed, e.g., where the drawn fiber is respooled from a larger drum to smaller spool.

Further embodiments are disclosed in the subsequent list of numbered clauses:

1. A method of manufacturing a hollow core cane for use in manufacturing a hollow-core photonic crystal fiber, the method comprising:

assembling a preform comprising a jacket with a hollow inner structure, wherein a plurality of capillaries are located within the hollow inner structure, the preform having a first end and a second end;
creating a tapered portion of the preform at the first end;
slicing the preform within the tapered portion to thereby create a sliced end of the preform and expose cavities of the plurality of capillaries and the hollow inner structure;
inserting a pressurization tube into one or more of the cavities at the sliced end of the preform;
sealing the least one pressurization tube within the one or more cavities with a sealing agent;
coupling the least one pressurization tube to a pressure connector; and
drawing a hollow core cane from the preform whilst providing pressure to the one or more cavities using the pressure connector.

2. The method of clause 1, where the method comprises inserting a pressurization tube into the cavity of one or more of the plurality of capillaries.

3. The method of clause 1 or 2, where the method comprises inserting a pressurization tube into the cavity of the hollow inner structure.

4. The method of any preceding clause, wherein assembling the preform comprises roughening an outer surface of the jacket over a portion of the jacket.

5. The method according to clause 4, wherein the roughening of the outer surface of the jacket comprises directing a fluid towards the portion of the jacket, the fluid comprising abrasive particles.

6. The method according to clause 5, wherein the abrasive particles comprise one or more of: aluminum oxide, silica, glass beads and steel grit.

7. The method according to any of clauses 4 to 6, wherein the portion of the jacket is located closer to the first end of the preform than to the second end of the preform.

8. The method according to any of clauses 4 to 7, wherein the portion of the jacket is located closer to the first end of the preform than to a center of the axial length of the preform.

9. The method according to any of clauses 4 to 8, wherein the portion of the jacket is separated from the first end of the preform by a further portion of the outer surface of the jacket.

10. The method according to clause 9, wherein the roughening is not performed on the further portion of the jacket.

11. The method of any preceding clause, wherein assembling the preform comprises inserting at least one stabilizing structure into the preform at one or both of the first end and second end such that the at least one stabilizing structure is located in between the plurality of capillaries.

12. The method of any preceding clause, wherein said inserting comprises inserting a pressurization tube such that the pressurization tube extends into a respective cavity by at least 1 cm, optionally by at least 2 cm, further optionally by at least 3 cm, further optionally by at least 4 cm, and further optionally by at least 5 cm.

13. The method of any preceding clause, wherein said inserting comprises inserting a pressurization tube such that a length of the pressurization tube extends from the sliced end external to the preform.

14. The method of any preceding clause, wherein the method further comprises directing a gas towards the sliced end during the drawing.

15. The method of any preceding clause, wherein the sealing agent is an ultraviolet-curing adhesive and said sealing comprises depositing the sealing agent at the sliced end and directing ultraviolet radiation towards the sealing agent.

16. The method of any preceding clause, wherein the method further comprises controlling the pressure provided to the one or more cavities during the drawing.

17. The method according to any preceding clause, wherein the hollow inner structure of the preform has a polygonal cross-section.

18. The method according to clause 17, wherein the hollow inner structure of the preform has a hexagonal cross-section.

19. The method according to any preceding clause, wherein a wall thickness of one or more of the plurality of capillaries is at least 100 $\mu$m.

20. A preform for manufacturing a hollow core cane, the preform comprising:

a jacket with a hollow inner structure, wherein a plurality of capillaries are located within the hollow inner structure, the preform having a first tapered end and a second end; and

one or more pressurization tubes for coupling to a pressure connector, the one or more pressurization tubes extending into one or more cavities of the preform and sealed with a sealing agent at the first tapered end.

Although specific reference may be made in this text to the use of lithographic apparatus in the manufacture of ICs, it should be understood that the lithographic apparatus described herein may have other applications.

Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A method of manufacturing a hollow core cane for use in manufacturing a hollow-core photonic crystal fiber, the method comprising:

assembling a preform comprising a jacket with a hollow inner structure, wherein a plurality of capillaries are located within the hollow inner structure, the preform having a first end and a second end;

creating a tapered portion of the preform at the first end;

slicing the preform within the tapered portion to thereby create a sliced end of the preform and expose cavities of the plurality of capillaries and the hollow inner structure;

inserting a pressurization tube into one or more of the cavities at the sliced end of the preform;

sealing the least one pressurization tube within the one or more cavities with a sealing agent;

coupling the least one pressurization tube to a pressure connector; and

drawing a hollow core cane from the preform whilst providing pressure to the one or more cavities using the pressure connector.

2. The method of claim 1, where the method comprises inserting a pressurization tube into the cavity of one or more of the plurality of capillaries.

3. The method of claim 1 or 2, where the method comprises inserting a pressurization tube into the cavity of the hollow inner structure.

4. The method of any preceding claim, wherein assembling the preform comprises roughening an outer surface of the jacket over a portion of the jacket.

5. The method according to claim 4, wherein the roughening of the outer surface of the jacket comprises directing a fluid towards the portion of the jacket, the fluid comprising abrasive particles.

6. The method according to any of claims 4 or 5, wherein the portion of the jacket is located closer to the first end of the preform than to the second end of the preform.

7. The method according to any of claims 4 to 6, wherein the portion of the jacket is located closer to the first end of the preform than to a center of the axial length of the preform.

8. The method according to any of claims 4 to 7, wherein the portion of the jacket is separated from the first end of the preform by a further portion of the outer surface of the jacket.

9. The method of any preceding claim, wherein assembling the preform comprises inserting at least one stabilizing structure into the preform at one or both of the first end and second end such that the at least one stabilizing structure is located in between the plurality of capillaries.

10. The method of any preceding claim, wherein said inserting comprises inserting a pressurization tube such that the pressurization tube extends into a respective cavity by at least 1 cm, optionally by at least 2 cm, further optionally by at least 3 cm, further optionally by at least 4 cm, and further optionally by at least 5 cm.

11. The method of any preceding claim, wherein said inserting comprises inserting a pressurization tube such that a length of the pressurization tube extends from the sliced end external to the preform.

12. The method of any preceding claim, wherein the method further comprises directing a gas towards the sliced end during the drawing.

13. The method of any preceding claim, wherein the sealing agent is an ultraviolet-curing adhesive and said sealing comprises depositing the sealing agent at the sliced end and directing ultraviolet radiation towards the sealing agent.

14. The method of any preceding claim, wherein the method further comprises controlling the pressure provided to the one or more cavities during the drawing.

15. A preform for manufacturing a hollow core cane, the preform comprising:

a jacket with a hollow inner structure, wherein a plurality of capillaries are located within the hollow inner structure, the preform having a first tapered end and a second end; and
one or more pressurization tubes for coupling to a pressure connector, the one or more pressurization tubes extending into one or more cavities of the preform and sealed with a sealing agent at the first tapered end.

**Fig. 1**

# Fig. 2

# Fig. 3

**Fig. 4**

**Fig. 5**

**Fig. 6**

Fig. 7

**Fig. 8**

**Fig. 9**

Fig. 10a  Fig. 10b  Fig. 10c  Fig. 10d

1100

| Assembling a preform | S1102 |

| Creating a tapered portion of the preform | S1104 |

| Slicing the preform to create a sliced end | S1106 |

| Inserting pressurization tube(s) into the preform | S1108 |

| Sealing the least one pressurization tube within the preform | S1110 |

| Coupling the pressurization tube(s) to a pressure connector | S1112 |

| Drawing a hollow core cane from the preform | S1114 |

**Fig. 11**

EP 4 656 603 A1

y

z

102

106

104

**Fig. 12**

Fig. 13b

Fig. 13a

Fig. 14

Fig. 15

Fig. 16

Fig. 17

Fig. 18

404

402

406

310

206

410

410

106

**Fig. 19**

Europäisches Patentamt
European Patent Office
Office européen des brevets

## EUROPEAN SEARCH REPORT

**Application Number**

EP 24 17 8298

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/135679 A1 (JAKOBSEN CHRISTIAN [DK] ET AL) 9 May 2019 (2019-05-09) * paragraphs [0007], [0027] - [0032]; claims 3,27; figure 4 * | 1-15 | INV.<br>C03B37/012<br>C03B37/027 |
| A | US 2024/092680 A1 (ROSENBERGER MANUEL [DE] ET AL) 21 March 2024 (2024-03-21) * paragraphs [0046], [0059], [0089], [0105]; claims 1,14; figure 1 * | 1-15 | |
| A | MURPHY LEAH R. ET AL: "Stack, seal, evacuate, draw: a method for drawing hollow-core fiber stacks under positive and negative pressure", OPTICS EXPRESS, vol. 30, no. 21, 26 September 2022 (2022-09-26), pages 37303-37313, XP093116213, US ISSN: 1094-4087, DOI: 10.1364/OE.470599 * 3.2 on page 37311; figures 4-6 * | 1-15 | |

**TECHNICAL FIELDS SEARCHED (IPC)**

C03B
G02B

The present search report has been drawn up for all claims

| Place of search | Date of completion of the search | Examiner |
|---|---|---|
| The Hague | 1 November 2024 | Creux, Sophie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                      
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8298

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2024

| Patent document cited in search report | Publication date | Patent family member(s) | Publication date |
|---|---|---|---|
| US 2019135679 A1 | 09-05-2019 | CN 109476526 A | 15-03-2019 |
| | | EP 3448818 A1 | 06-03-2019 |
| | | US 2019135679 A1 | 09-05-2019 |
| | | WO 2017186246 A1 | 02-11-2017 |
| US 2024092680 A1 | 21-03-2024 | CN 116472254 A | 21-07-2023 |
| | | EP 4015474 A1 | 22-06-2022 |
| | | JP 7496939 B2 | 07-06-2024 |
| | | JP 2023553383 A | 21-12-2023 |
| | | US 2024092680 A1 | 21-03-2024 |
| | | WO 2022128273 A1 | 23-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B

- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1
- US 2004015085 A1
- WO 2017032454 A1
- WO 2018127266 A1
- US 9160137 B1
- EP 23188363